# EUROPEAN PATENT SPECIFICATION

(11) **EP 2 824 958 B1**
(45) Date of publication and mention of the grant of the patent: **11.01.2017**
(21) Application number: 13305994.9
(22) Date of filing: 12.07.2013
(51) Int. Cl.: H04W 16/14

(54) **Wireless telecommunications network nodes and methods**
Knoten für drahtloses Telekommunikationsnetzwerk und Verfahren
Noeuds de réseau de télécommunications sans fil et procédés

(43) Date of publication of application: 14.01.2015
(73) Proprietor: ALCATEL LUCENT, 92100 Boulogne-Billancourt (FR)
(72) Inventor: Lopez-Perez, David, DUBLIN, 15 (IE); Kucera, Stephen, DUBLIN, 15 (IE); Claussen, Holger, DUBLIN, 15 (IE)
(74) Representative: Sarup, David Alexander

(56) References cited:
- US-A1- 2005 130 662
- RESEARCH IN MOTION ET AL: "Discussion on Protocol Stack Support in Small Cell eNB", 3GPP DRAFT; R2-130068 - SMALL CELL PROTOCOL STACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 18 January 2013 (2013-01-18), XP050668135, Retrieved from the Internet: URL:http://www.3gpp.org/ftp/tsg_ran/WG2_RL 2/TSGR2_81/Docs/ [retrieved on 2013-01-18]
- "3rd Generation Partnership Project; Technical Specification Group Radio Access Network; Evolved Universal Terrestrial Radio Access (E-UTRA); Study on Small Cell Enhancements for E-UTRA and E-UTRAN - Higher layer aspects (Release", 3GPP DRAFT; R2-132226 36842-011, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 2 June 2013 (2013-06-02), XP050700330, Retrieved from the Internet: URL:http://www.3gpp.org/ftp/tsg_ran/WG2_RL 2/TSGR2_82/Docs/ [retrieved on 2013-06-02]
- ALCATEL-LUCENT ET AL: "Discussion on dual connectivity and requirements", 3GPP DRAFT; R2-130520, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 18 January 2013 (2013-01-18), XP050668113, Retrieved from the Internet: URL:http://www.3gpp.org/ftp/tsg_ran/WG2_RL 2/TSGR2_81/Docs/ [retrieved on 2013-01-18]
- INTEL CORPORATION: "Scenarios and benefits of dual connectivity", 3GPP DRAFT; R2-130570, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 19 January 2013 (2013-01-19), XP050668406, Retrieved from the Internet: URL:http://www.3gpp.org/ftp/tsg_ran/WG2_RL 2/TSGR2_81/Docs/ [retrieved on 2013-01-19]
- CATR: "Further discussion on potential issues of dual connectivity", 3GPP DRAFT; R2-131314, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 5 April 2013 (2013-04-05), XP050699321, Retrieved from the Internet: URL:http://www.3gpp.org/ftp/tsg_ran/WG2_RL 2/TSGR2_81bis/Docs/ [retrieved on 2013-04-05]

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

"DISCUSSION ON PROTOCOL STACK SUPPORT IN SMALL CELL eNB" by RESEARCH IN MOTION ET AL R2-130068 at 3GPP TSG RAN WG2 meeting 28/1/13-1/2/13, discloses a network with split control and user planes, where the control plane traffic can be handled through the macrocell while the bulk of the user plane traffic can be offloaded to the underlying small cells. This document discusses different protocol stack division options, and the benefits and drawbacks of each one of them.

3RD GENERATION PARTNERSHIP PROJECT - TECHNICAL SPECIFICATION GROUP RADIO ACCESS NETWORK; "EVOLVED UNIVERSAL TERRESTRIAL RADIO ACCESS (E-UTRA); STUDY ON SMALL CELL ENHANCEMENTS FOR E-UTRA AND E-UTRAN - HIGHER LAYER ASPECTS" (RELEASE 12) 3GPP TR 36.842 V0.1.1 (2013-05) describes some of
the main challenges of small cell deployments, e.g., mobility robustness, uplink/downlink coverage imbalance, increased core network signalling, shortcomings of CoMP for HetNets as well as network planning and configuration issues.

### SUMMARY

According to a first aspect, there is provided a small cell base station for deployment within an overlying cell supported by an overlying cell base station of a wireless telecommunications network and operable to support communication with user equipment, said small cell base station comprising: determining logic operable to determine a presence of said overlying cell and to determine resources allocated for transmission of control plane data by said overlying base station; transmission logic operable to support transmission only of user plane data with said user equipment; and preventing logic operable to prevent transmission of any user plane data within said resources allocated for transmission of control plane data by said overlying cell base station; and wherein said user plane data comprises a channel state information-reference signal.

The first aspect recognises that increasing demands for mobile data services are driving strong growth in network traffic. Network traffic is set to grow exponentially over the coming years, and wireless data traffic is growing the most rapidly. In order to meet such wireless data traffic growth, vendors and operators are investigating different solutions. Among them, the deployment of small cells, e.g., pico cells, femto cells and relay nodes, overlaid on the traditional macro cell network has been heralded as the most promising solution to provide a major network performance leap. This new network architecture is usually referred to as a Heterogeneous Network (HetNet). The first aspect also recognises that HetNets, however, pose challenges in mobility management. Because of the larger number of deployed cells (which may grow several orders of magnitude) and the reduced coverage of small cells, the number of handovers and unnecessary handovers (i.e., handovers which lead to a time-of-stay within a cell shorter than a threshold, for example, 1 second) are expected to increase considerably, together with network signalling and overhead. Moreover, since handover parameters (for example, hysteresis, time to trigger) are usually optimized for macro cells, and not for small cells, the number of handover failures, which may result in call drops, may also increase considerably, together with subscriber dissatisfaction and subscriber churn.

To some extent, mobility issues can be addressed by re-optimizing handover parameters, for example, selecting proper time-to-trigger. However, this optimization would have to be performed in a per-cell and per-User Equipment (UE) basis depending on the cell size and UE velocity, which may again increase signalling and overhead. Moreover, it relies on the ability of estimating UE velocity. However, current UE mobility estate estimation techniques have been shown to perform poorly in HetNet scenarios.

Mobility issues can also be addressed by inter-cell interference coordination, for example, small cells release the use of certain resources, so that macro cells can schedule their high-mobility UEs in these resources without inter-cell interference from small cells. In this way, high-mobility UEs seamlessly move across small cells while connected to macro cells. However, this solution may significantly affect spatial reuse due to unused resources at small cells and require accurate synchronization among the scheduling of both macro cells and small cells.

A lot of effort has been and is being put into enhancing mobility performance in HetNet scenarios. A capital issue in mobility performance optimization is the trade-off between handover failures and handover ping-pongs (i.e., unnecessary handovers in which the target cell is the same as the source cell in the previously executed handover). Optimizing handover parameters to reduce handover failures increases ping-pongs, and vice versa.

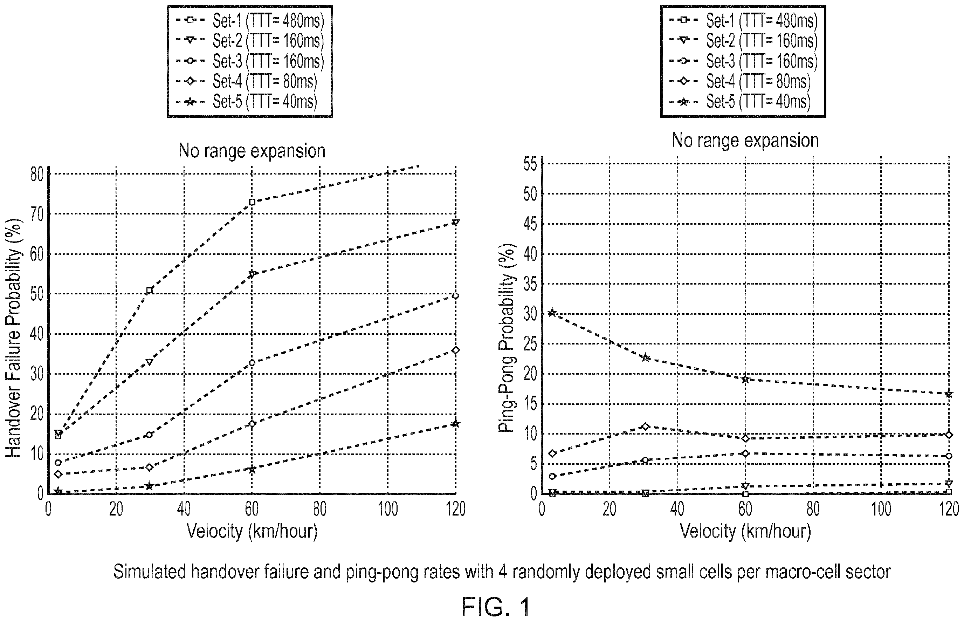

For example, as illustrated in Figure 1, reducing time to trigger may mitigate handover failures (since the handover occurs earlier and radio link failure may be avoided), but increases ping-pong handovers (since less layer 1 filtering is done and fading impacts UE measurements). The opposite statement is also true. This makes handover optimization an intricate problem, which is exacerbated in HetNets due to the large number of small cells overlaid on the traditional macro cell network.

UE velocity is also an important factor to consider, as can be derived from Figure 1. In HetNets, high-mobility UEs are likely to experience a radio link failure before the handover is completed, because they may not be able to connect soon enough to a small cell due to, for example, time to trigger and handover processing time, even when the small cell provides better link quality. Therefore, tuning handover parameters based on UE mobility state information or measurement report processing have been and is being a widely studied approach within standardization bodies to enhance mobility performance.

One approach is to scale time to trigger using a UE-specific factor α∈[0,1], which is selected as a function of UE velocity, so that a high-mobility UE (using low α values) is handed over to the target cell earlier than a low-mobility UE (using high α values). In this way, handover failures are mitigated for the former UEs (thanks to short time to trigger) and ping-pongs are reduced for the latter UEs (due to large time to trigger). However, in HetNets, this method does not prevent high-mobility UEs from handing over to small cells, which may be unnecessary due to short time-of-stay. Moreover, if the network selects factor α, cell-to-UE signalling would be required, while if the UE selects factor α, no degree of freedom would be left to the network operator.

Another approach is a mobility-based inter-cell interference coordination scheme that combines handover parameter optimization with enhanced inter-cell interference coordination, so as to reduce both handover failures and ping-pongs for high- and low-mobility UEs. On the one hand, in order to protect high-mobility UEs from handover failures, small cells release certain resources, so that macro cells can schedule their high-mobility UEs in these resources without inter-cell interference from small cells. Since high-mobility UEs are not handed over to small cells, ping-pongs are also mitigated. Resources can be coordinated in time (for example, subframes), frequency (for example, component carriers) or space (for example, beam directions) domains. On the other hand, in order to protect low-mobility UEs from ping-pongs, a large time to trigger is selected for low-mobility UEs. However, mobility performance improvements come at the expense of unused resources at small cells, which may significantly reduce overall network performance (a whole carrier or an entire subframe should be scarified in the frequency and time domain implementations, respectively).

Another drawback of these approaches, is that they depend upon detection of UE mobility state information, i.e., low-mobility or high-mobility (either for selecting an 813803
appropriate UE-specific factor α or applying enhanced inter-cell interference coordination), but current UE mobility state estimation techniques suffer from a low performance in HetNets.

Accordingly, a small cell base station may be provided. The small cell base station may be deployed within an overlying cell which is supported by an overlying cell base station. The small cell may be operable to support communication with user equipment. The small cell base station may comprise determining logic operable to determine a presence or existence of the overlying cell and to determine those resources allocated for the transmission of control plane data by the overlying base station. The small cell base station may also comprise transmission logic operable to support transmission only of user plane or selected data with the user equipment. That is to say, the transmission logic supports transmission only of a subset of all the possible data transmittable by a base station. The small cell base station may also comprise preventing logic operable to prevent transmission of any of that user plane or selected data within the resources which are allocated for transmission of the control plane data transmitted by the overlying cell base station.

The user plane data comprises a channel state information- reference signal.

By transmitting only user plane or selected data, the small cell base station can prevent itself from transmitting that data which identifies itself as a cell to user equipment and thereby prevent user equipment from initiating handover to that small cell. Also, by preventing transmission of the user plane or selected data within those resources which are allocated for transmission of control plane data by the overlying cell base station, any interference caused by transmissions by the small cell are minimised on those control plane transmissions from the overlying cell base station in order to maintain adequate reception of vital control plane transmissions. This helps to ensure that user plane or selected data plane transmissions can be made from the small cell base station in order to boost capacity where required, without needing to perform handover to those small cells and without causing interference to the control plane transmissions being made by the overlying cell base station.

In one embodiment, the user plane data fails to include control plane data. Accordingly, the user plane or selected data omits selected control plane data.

In one embodiment, the control plane data comprises data used to identify a small cell. Accordingly, those transmissions normally used to identify the existence of a small cell are omitted and not transmitted.

In one embodiment, the control plane data comprises data used to identify a small cell to user equipment as a handover target. Accordingly, those transmissions which identify the small cell to user equipment as a potential handover candidate are omitted in order to prevent a conventional handover procedure from being initiated when the user equipment comes into the range of the small cell base station.

In one embodiment, the control plane data comprises at least one of a primary synchronisation signal, a secondary synchronisation signal, a broadcast channel and a common reference signal. Accordingly, one or more of the primary synchronisation signal, secondary synchronisation signal, the broadcast channel (which includes the master information block and secondary information block) and the common reference signal (which includes the pilot) are omitted or prevented from being transmitted by the small cell base station.

In one embodiment, the user plane data comprises a channel state information-reference signal and a demodulation-reference signal. Accordingly, the user plane or selected data transmitted by the small cell base station includes one or more of a channel state information-reference signal and a demodulation-reference signal. It will be appreciated that the user plane data may also include user data provided by user applications executing on the user equipment. By transmitting these signals, existing mechanisms can be utilised in order to identify that the user equipment is within the range of the small cell base station and enable data transmissions through that small cell base station by, typically, routing the radio resource control connection via that small cell base station but without causing a conventional handover to that small cell base station to occur.

In one embodiment, the preventing logic is operable to prevent transmission of any user plane data within resource elements used by the overlying cell to transmit the control plane data by the overlying cell base station.

In one embodiment, the determining logic operable to determine resources allocated for transmission of control plane data with neighbouring overlying cell base stations and the preventing logic is operable to prevent transmission of any user plane data within resource elements used by neighbouring overlying cells to transmit the control plane data by the neighbouring overlying cell base stations. Accordingly, not only may transmissions be prevented within the resources being utilised by the overlying cell base station for its control plane transmissions, but also the resources used by neighbouring overlying cell base stations may be prevented from being used for transmissions by the small cell base station.

In one embodiment, the determining logic is operable to select randomly a channel state information-reference signal for transmission as user plane data.

In one embodiment, the determining logic is operable to select a channel state information-reference signal for transmission as user plane data which is determined to be unused by neighbouring small cells.

In one embodiment, the channel state information-reference signal is transmitted with a defined power to enable user equipment to estimate path loss of signals from the small cell base station. Accordingly, the user equipment may estimate path loss using the channel state information-reference signal transmitted by the small cell.

In one embodiment, the preventing logic is operable to prevent transmission of any data when no user plane data is scheduled for transmission. If there is user equipment present, then these may be served through the overlying cell and the small cell would not need to be woken up. Accordingly, transmissions by the small cell base station may be ceased when no user plane or selected data is currently scheduled for transmission. This helps to reduce the energy consumption of the small cell base station.

In one embodiment, the transmission logic is operable to support transmission of user plane data with the user equipment following the establishment of a radio resource control connection with a node of the wireless telecommunications network. Accordingly, a radio resource control connection may be established with, for example, the overlying cell base station in order to support communication with the user equipment via that small cell base station. Radio resource control connection maintenance and release may also be performed by the overlying cell base station.

According to a second aspect, there is provided a small cell base station method, comprising: determining a presence of an overlying cell and determining resources allocated for transmission of control plane data by said overlying base station; supporting transmission only of user plane data with user equipment; and preventing transmission of any user plane data within said resources allocated for transmission of control plane data by said overlying cell base station; wherein said user plane data comprises a channel state information-reference signal.

In one embodiment, the user plane data fails to include control plane data.

In one embodiment, the control plane data comprises data used to identify a small cell.

In one embodiment, the control plane data comprises data used to identify a small cell to user equipment as a handover target.

In one embodiment, the control plane data comprises at least one of a primary synchronisation signal, a secondary synchronisation signal, a broadcast channel and a common reference signal.

In one embodiment, the user plane data comprises a channel state information-reference signal and a demodulation-reference signal.

In one embodiment, the user plane data comprises user data.

In one embodiment, the step of preventing comprises preventing transmission of any user plane data within resource elements used by the overlying cell to transmit the control plane data by the overlying cell base station.

In one embodiment, the step of determining comprises determining resources allocated for transmission of control plane data with neighbouring overlying cell base stations and the wherein the step of preventing comprises preventing transmission of any user plane data within resource elements used by neighbouring overlying cells to transmit the control plane data by the neighbouring overlying cell base stations.

In one embodiment, the step of determining comprises selecting randomly a channel state information-reference signal for transmission in the user plane data.

In one embodiment, the step of determining comprises selecting a channel state information-reference signal for transmission in the user plane data which is determined to be unused by neighbouring small cells.

In one embodiment, the channel state information-reference signal is transmitted with a defined power to enable user equipment to estimate path loss of signals from the small cell base station.

In one embodiment, the step of preventing comprises preventing transmission of any data when no user plane data is scheduled for transmission.

In one embodiment, the step of supporting transmission comprises supporting transmission of user plane data with the user equipment following the establishment of a radio resource control connection with a node of the wireless telecommunications network.

According to a third aspect, there is provided an overlying cell base station of a wireless telecommunications network for supporting an overlying cell within which at least one small cell base station is deployable, said overlying cell base station comprising: presence determining logic operable to determine a presence of said at least one small cell base station operable to support transmission only of user plane data with user equipment; and connection control logic operable, when it is determined from a channel state information-reference signal that a received signal strength between said user equipment and one of said at least one small cell base stations exceeds that between the user equipment and a currently serving base station by a threshold amount, to cause a radio resource control connection to be established with said user equipment and routed via said one of said at least one small cell base stations.

Embodiments provide features corresponding to features of the first aspect.

According to a fourth aspect, there is provided an overlying cell base station method, comprising: determining a presence of at least one small cell base station operable to support transmission only of user plane data with user equipment; and when it is determined from said channel state information-reference signal that a received signal strength between said user equipment and one of said at least one small cell base stations exceeds that between the user equipment and a currently serving base station by a threshold amount, causing a radio resource control connection to be established with said user equipment and routed via said one of said at least one small cell base stations.

Embodiments provide features corresponding to features of the second aspect.

According to a fifth aspect, there is provided a computer program product operable, when executed on a computer, to perform the method steps of the second or the fourth aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates simulated handover failure and ping-pong rates with 4 randomly deployed small cells per macro-cell sector;
Figure 2 illustrates a comparison of (a) current network configuration and (b) proposed network configuration;
Figure 3 illustrates an example of the proposed heterogeneous network scenario according to one embodiment;
Figure 4 illustrates small cells blanking resource elements in which the umbrella macro cell transmit its common reference signal (CRS); and
Figure 5 illustrates an analogy between 8x8 multiple-input and multiple-output (MIMO) and small data cells from a channel state information-reference signal (CSI-RS) perspective.

### DESCRIPTION OF THE EMBODIMENTS

### Overview

Before discussing the embodiments in any more detail, first an overview will be provided. Embodiments provide an architecture arrangement where small cell base stations located within an overlying cell, such as, for example, a macro cell, are configurable to support data transmissions with user equipment, but which do not transmit the conventional, complete control plane data which identifies the existence of the small cell base station to user equipment as a handover target. In particular, those control plane signals which identify the existence of the small cell, such as, for example, Primary Synchronization Signal (PSS), Secondary Synchronization Signal (SSS) providing synchronisation, a common reference signal providing a pilot or a broadcast channel providing the master information block and secondary information block, are not transmitted by the small cell base station. This prevents the user equipment from identifying the small cell base stations as a potential handover target and so reduces the occurrence of handovers between the overlying cell base station and the small cell base stations.

Also, in order to reduce the likelihood that the user equipment does not lose its connection with the overlying cell when in close proximity to the potentially interfering small cell base station, the small cell base station identifies the resources used by the overlying cell to transmit its control plane data and avoids performing transmissions using those resources.

Furthermore, in order to utilise the small cell base stations to provide additional capacity in the vicinity of user equipment, the small cell base stations continue to transmit a channel state information-reference signal (CSI-RS) which can be used by the network to identify the proximity of a small cell base station to user equipment. This effectively re-uses existing MIMO functionality within the network. The user equipment has existing functionality to report the existence of such CSI-RS signals to the network, and the network can use this information to identify that the user equipment is in proximity to a small cell base station. This enables the network to reestablish a radio resource control connection with the small cell base station identified by its CSI-RS signal reported by the user equipment, such that user plane data can be routed via the small cell base station to the user equipment, whilst the user equipment retains a control plane link with the overlying cell base station.

This enables small cell base stations to be distributed throughout the overlying cell, but causes no handovers to those small cell base stations, nor any interference in the control plane between the user equipment and the overlying cell. As the user equipment moves away from a small cell base station, the radio resource control connection can be re-established via the overlying cell or via another small cell identified as being in the vicinity of the user equipment by virtue of the detection of its CSI-RS.

### Architecture Overview

In order to facilitate mobility management in heterogeneous networks (HetNets), embodiments provide a network configuration in which: (i) the small cells are rendered effectively transparent to the user equipment (UEs) by means of muting, omitting or preventing transmission of their own specific reference/ control signals; (ii) the UEs are only aware of the presence of the umbrella macro cells within which the small cells are located due to the broadcast of their specific macro-reference/ control signals. Given that some cell identification is generally required for the small cells, for example, for cell association purposes, the explicit cell identifiers may be replaced by implicit cell identifiers, unrelated to handovers. As a result, this network configuration fundamentally removes the need for handovers to/from small cells, and ameliorates the related handover problems. Also, embodiments are fully compatible with the third generation partnership project (3GPP) long term evolution (LTE) Release 11 standard.

In particular, in embodiments, the control and data plane of the network are split, and no longer transmitted by each (macro/small) base station node. Embodiments recognise that the presence of the control and data plane being transmitted by each or every (macro/small) base station node in existing HetNets leads to high handover rates. In embodiments, the control plane, which is closely related to the cell identity within the air interface, is instead transmitted solely or only by the umbrella macro cells, whereas the data plane, which carries UE data, can be handled by both the macro and small cells.

As a result, the underlay small cells do not have a macro-cell-like identity of their own, but simply reuse the identity of their umbrella macro cells to perform the actual transmissions with the UE. In order to implicitly differentiate amongst the small cells, this inversion uses multiple input multiple output (MIMO) channel state information reference signals (CSI-RSs).

Since the cell identity, essentially a handover (HO) differentiator, is broadcast only by macro cells, in embodiments there are no macro-to-small cell or small cell-to-small cell handovers. Therefore, handovers occur only at the macro cell level, as in a standard macro cell network without any small cells. Such macro-level handovers are not an issue since current handover schemes has been proven to work well in networks containing macro cells only.

More specifically, in terms of the actual LTE standards, the network configuration of embodiments is characterized by the following:
- Small cells do not transmit any control plane identification information such as Primary Synchronization Signal (PSS), Secondary Synchronization Signal (SSS), Broadcast Channel (BCH) and Common Reference Signal (CRS). Small cells only engage in UE data transmissions. In other words, small cells do not transmit primary portions of the control plane, but handle the transmission of UE data-plane information. Such small cells will be referred in the following to as *small data cells.*
- The control plane identification information is provided to UEs only by the umbrella macro cells on behalf of the hosted small data cells. The umbrella macro cell to which each small cell is anchored may operate in the same or a different frequency band as their small data cells.
- The small data cells may not transmit any data on the resource elements used by their umbrella macro cells to transmit their CRSs to allow UEs an adequate detection of the macro cell CRS within its coverage area, and thus facilitate mobility management and mitigate radio link failure (UEs declaring out-of-sync by themselves because they cannot decode the macro cell CRS).
- The small data cells transmit both the Channel State Information-Reference Signals (CRS-RS) to allow UEs served by small data cells to estimate channel state information, and the Demodulation-Reference Signals (DM-RS) to provide UEs served by small data cells with a pilot signal for coherent demodulation.
- CSI-RSs are used not only for channel state information estimation purposes, but also as soft-pilots to (i) allow UEs to identify the strongest small data cell, and (ii) compute the path loss to the strongest small data cell for uplink (UL) fractional power control purposes.
- Since the number of independent CSI-RS available is limited and may be smaller than the number of small data cells deployed per macro cell, the network in embodiments is equipped with a method, centralized and/or distributed, able to efficiently reuse CSI-RS across the network such that confusion and collision problems are mitigated.

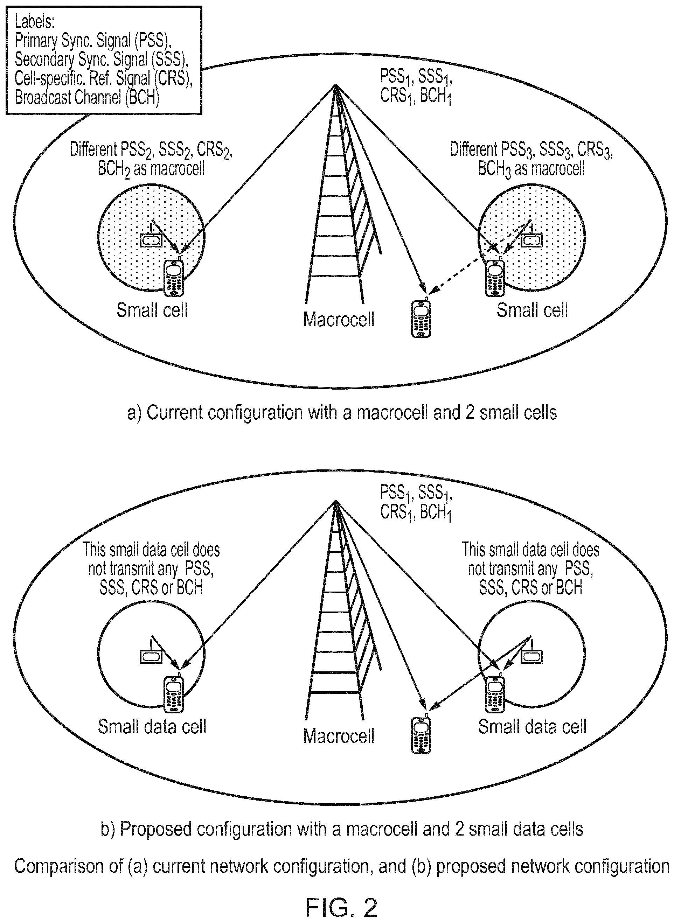

For comparison purposes, Figure 2a illustrates a conventional network configuration in which the umbrella macro cell and small cells transmit different control information.
Figure 2b illustrates a network configuration according to one embodiment in which the umbrella macro cell transmits control and user-plane information, while small data cells only transmit user-plane information. Since the small data cells do not transmit the control plane, there is no need for triggering handovers among the umbrella macro cell and small data cells. Additionally, since small data cells may not transmit in the resource elements used by the umbrella macro cells (and/or neighbouring cells) to transmit their CRSs, the UE wideband Signal to Interference plus Noise ratio (SINR) measurements will be free of interference and radio link failure can be significantly mitigated. Moreover, as small data cells do not transmit a control plane, their power consumption will be minimised when there are no UEs in their coverage area.

Furthermore, because small data cells do not use any Physical Cell Identity (PCI) and are invisible to UEs, PCI collision/confusion issues are also avoided.

It will be appreciated that the network configuration of embodiments is fully compatible with current standards since CRS-RS and DM-RS has been recently standardized within the 3GPP Release 11 MIMO/CoMP framework. Consequently, small data cells will appear to UEs as `antennas' of a MIMO array, having an in-built scheduler and base band processing capabilities among other features.

### Example Network Configuration

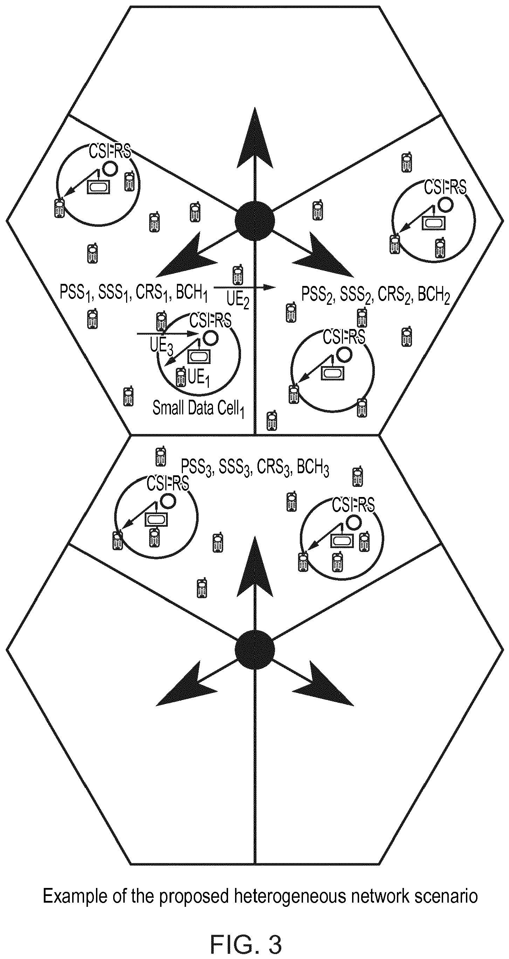

Figure 3 illustrates a network configuration according to one embodiment. In order to assist understanding, downlink communication is illustrated but it will be appreciated that the same approach can also be applied to uplink communication. Three umbrella macro cells are shown, with two small data cells are deployed in each umbrella macro cell. In this example, all cells reuse the same spectrum.

The three umbrella macro cells transmit in their standard configuration different cell-specific control information. However, the small data cells do not transmit control plane signalling, which is instead provided by their umbrella macro cells, and thus are invisible to the UEs. Each small data cell has assigned a different CSI-RS. Current standards provide for 40 independent CSI-RS. Several UEs are uniformly distributed in the coverage area of each cell. UE 1 is static, while UE 2 and UE 3 are mobile.

### Control plane transmissions

As can be seen in Figure 3, macro cells transmit their respective PSSs, SSSs, BCHs and CRSs so as to provide UEs with the necessary information to access the radio access network. However, small data cells do not transmit any PSS, SSS, BCH and CRS, and so do not have a recognizable distinct cell identity on their own, and thus they become 'invisible' to the UEs. For example, UE 1, which is within the coverage range of small data cell 1, is not aware of the presence of small data cell 1, and gets synchronized and accesses the network using the control plane of macro cell 1. However, from the data plane perspective, UE 1 is severed by small data cell 1 with high data rates since UE 1 is nearby the node serving small data cell 1 and is the only UE within its coverage area. This network configuration takes hence advantage of the fact that UEs do not need to be aware of the serving node location to decode their data.

### Blanking of resources at small data cells

In order to evaluate when a handover should be initiated (for example, through the event A3 condition), UEs perform Reference Signal Receive Power (RSRP) measurements over the CRSs of the cells in their vicinity or neighbourhood. It is important to note that CRSs are QPSK modulated and Gold coded with a length-31 sequence, which facilitate RSRP decoding and RSRP estimations. Hence, a mobile UE, for example, UE 2 in Figure 3, moving from macro cell 1 to macro cell 2 will perform a standard HO between macro cell 1 and macro cell 2, as it would do in a macro-only scenario, when it detects that the RSRP of the source cell multiplied by a corrective factor is weaker than the RSRP of the target cell. However, a mobile UE, for example, UE 3, moving from macro cell 1 to small data cell 1 will not initiate any handover, since the latter cell does not transmit any CRS and UE 3 is not aware of its presence.

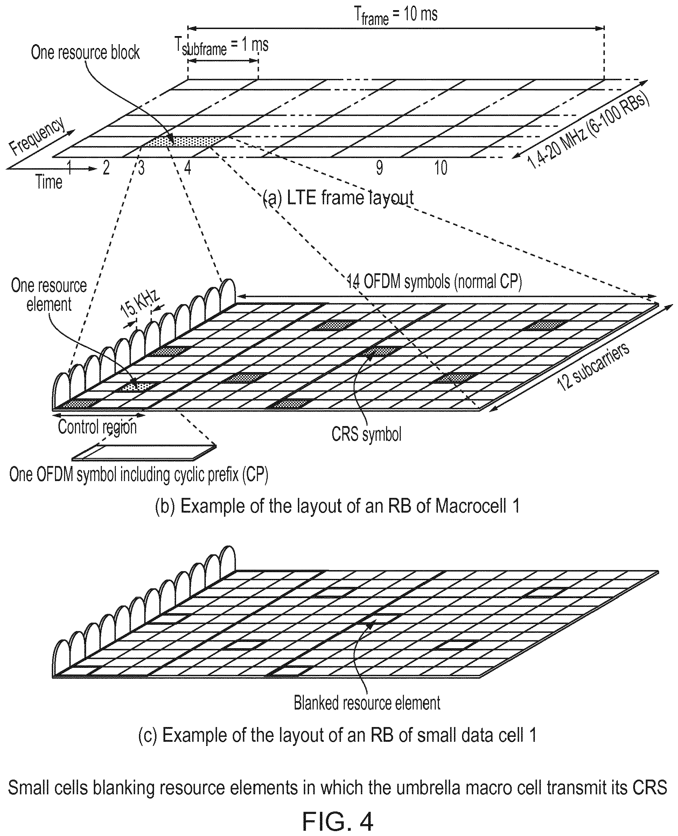

Moreover, since radio link management measurements (i.e., wideband SINR measurements) are performed over the CRS of the umbrella macrocell, small data cells are prevented from transmitting any data on the same resource elements used by their umbrella macro cells to transmit their CRSs, as illustrated in Figure 4. Hence, UEs nearby small data cells should perceive a higher wideband SINR than they would do in the standard HetNet scenario (herein, small cells transmit data in macro-CRS resource elements and jam the macro-cell CRS estimation). Through this blanking, UEs within the coverage area of small data cell 1 or moving to it, for example, UE 1 or UE 3, will estimate a high wideband SINR free of small cell interference, and thus will not declare radio link failure by themselves. The blanking of resource elements used by neighbouring macro cells to transmit their CRSs is not necessary, since they are not used for radio link management but for RSRP estimations (handover triggering), which can always be accurately performed at cell edges due to the modulated and coded nature of CRSs (orthogonalization by means of Gold codes).

### Use of CSI-RS for channel estate information and DM-RS for demodulation

In order to aid understanding of the network configuration of embodiments, more detail of the purpose CRS, CSI-RS and DM-RS serve in LTE will now be discussed.

CRS are used, amongst other things, for estimating the channel from the eNodeB to the UE for channel state information feedback and demodulation. CRS is not pre-coded, an important feature since all UEs in a cell use the same CRS irrespective of their configured transmission mode, speed, location, throughput requirements and so forth. In addition, CRS is tied to the PCI of the transmitting cell, which imposes undesired restrictions to the operation of certain deployment scenarios in HetNets. Other potentially detrimental characteristics of CRS in dense small cell deployments are that they create interference to neighbouring cells and that they consume a lot energy because they are continuously transmitted across the entire system bandwidth, typically in all resource blocks, and in all sub-frames. Some of these issues have been addressed in LTE-A with the introduction of user-specific reference signals, namely, CSI-RS and DM-RS.

CSI-RS is a pilot signal inserted within specific resource elements, and used by the UE to estimate channel state information feedback to the serving cell. Signalling overhead and energy consumption can be significantly reduced, for example, by configuring larger reporting intervals for low mobility UEs, and shorter ones for UEs having higher speed. Consequently, CSI-RS symbols are not present in each subframe as the legacy CRS symbols, resulting in reduced signalling overhead and greater energy efficiency. CSI-RS are required to support the advances LTE-A brings forward relating to MIMO and CoMP.

DM-RS is a pilot signal inserted and coded within specific resource elements, and used by the UE to estimate the channel for demodulation purposes. In contrast to CRS and CSI-RS, DM-RS is pre-coded and only present in those resource blocks used to transmit data to a given UE. This not only further increases the efficiency in terms of signalling overhead and energy consumption, but more importantly, also allows for non-codebook-based pre-coding which is desirable, for instance, in TDD deployments due to piggyback channel reciprocity.

Since CSI-RS and DM-RS, unlike CRS, are decoupled from the PCI, small data cells will transmit these new reference signals to make possible channel state information feedback and demodulation.

### Reusing CSI-RS as soft-pilots

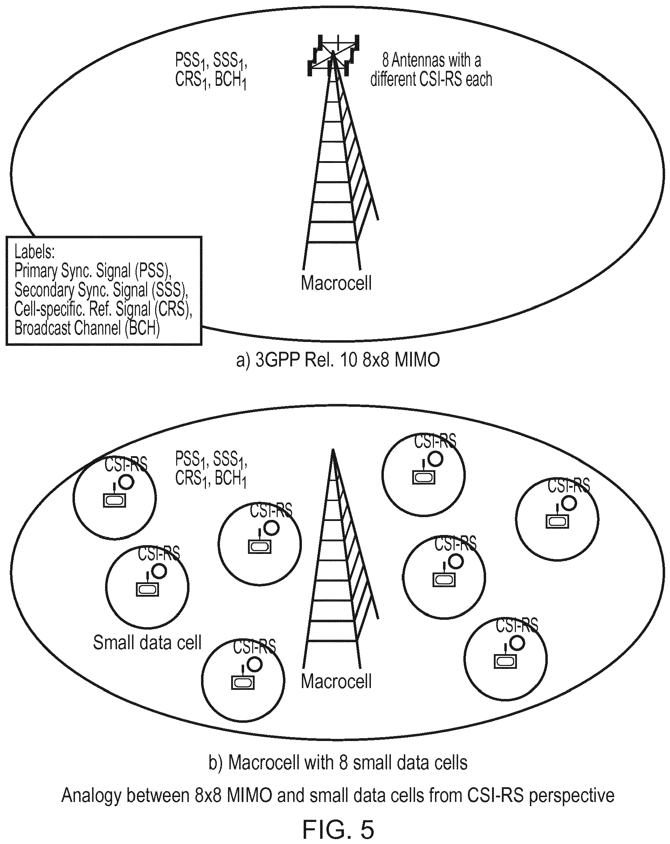

Embodiments use CSI-RS not only to allow channel state information feedback, but also to configure "soft/virtual" cell IDs, such that the network, based on measurements over CSI-RS, can choose in a dynamic manner the appropriate small data cell (for example, the closest one or the one with the highest signal quality) for data transmission. As indicated above, 3GPP Release 11 introduces 40 different CSI-RSs within the MIMO/CoMP framework, and they are used to allow independent channel state information feedback from the different antennas of a MIMO/CoMP array. In the small data cell case, similar to the MIMO/CoMP case, embodiments provide that each small data cell "behaves" as an antenna of a MIMO/CoMP array, and transmits a given pre-selected CSI-RS (see Figure 5), which will provide a virtual ID to the small data cell and allow UEs to estimate the appropriate small cell for data transmission. As mentioned before, similarly to the macro-cell-only scenario, UEs will identify the strongest macro cell through CRS measurements. However, UEs will identify the strongest small data cell trough CSI-RS measurements. Since CSI-RS are not HO specific, the UEs will not initiate handovers towards small data cells.

Embodiments also use CSI-RS as a reference to estimate the downlink path loss from a small data cell node to connected UE for UL fractional power control purposes.

### Method to mitigate CSI-RS collision and confusion

Since the number of CSI-RS is limited to 40 in 3GPP Release 11, the maximum number of cells that can be distinguished based on the CSI-RS alone is 40. Hence, CSI-RS reuse is necessary in networks where more than 40 small data cells are located in one (connected) cell cluster (e.g., within one macro cell).

The simplest way to allocate CSI-RSs is distributed allocation by using a random selection approach. In general, the relatively large CSI-RS number implies low probability of identity collision (occurring when two or more nearby small data cells use the same CSI-RS). A model of a macro cell with deployed small data cells based on planar graphs indicates that small data cells hosted by one macro cell can avoid collisions by using at most four CSI-RSs disregarding the small-data-cell number and distribution. More formally, a simple random-choice scheme is shown to converge to the optimum configuration with no identity collisions among neighbouring cells. The scheme can be used to minimize the number of required CSI-RSs.

In order to avoid identity confusions (the umbrella macrocell cannot distinguish between two or more small data cells that use the same CSI-RS), the CSI-RS allocation can be optimized such that all small data cells belonging to the same umbrella macrocell are assigned, if possible, as many different CSI-RS as possible, thus making them more likely uniquely identifiable within the macro-cell coverage. This new constraint requires a larger number of CSI-RS to be used compared to the above random approach, but minimizes confusion issues and the overhead required to resolve them. Another advantage of this approach stems in the fact that a resolution of identity confusion can be based on the comparison of the identities of the neighbouring small data cells (a so-called fingerprint approach). To this end, standard UEs reports on measurements of signals from neighbouring small data cells can be considered.

### Implications for lightRadio pico cells

The network configuration of embodiments can be used to allow efficient lightRadio pico cell deployments. Pico cells would become pico data cells. By adopting the network configuration of embodiments, a large number of pico cells could be deployed in large hot spot areas (e.g., downtown Madrid), while allowing seamless mobility for connected UEs. Moreover, since spatial reuse and independent scheduling decisions at the umbrella macro cell and pico data cells are allowed, hot spot UEs will still benefit from large throughputs through spatial reuse. This approach works even for operators with only one carrier, and would facilitate network deployment and reduce power consumption.

### Extensions

The network configuration of embodiments can be extended as follows:
- Small data cells transmit the same control signalling as the umbrella macro cell. In other words, small cells transmit the same control plane information, which is comprised of PSS, SSS, BCH and CRS. In this case, small data cells are still invisible to the UEs, but UEs estimate with a better signal quality the umbrella macro cell control plane.
- New small data cells pilot signals may be designed to allow UEs a fast and reliable small data detection.
- New cell association procedures based on the existing pilot signals or new ones that may rely on macro-centric or distributed approaches may be devised.

In general, embodiments provide a method of configuring cells in a heterogeneous network that offers overall reduction of cell planning, easy on-demand deployment, robust mobility support, battery-efficient cell discovery owing to a simple macro-cell overlay, and higher energy-efficiency/lower interference for data transmission on both the BS and the UE side.

In terms of current networks, the embodiments ensure the co-existence of macro cells and small data cells in a HetNet environment facilitating network cell planning and avoiding macrocell-to-small data cell and small data cell-to-small data cell handovers. Since small data cells do not transmit any control plane, network deployment is facilitated because the set up of PCI, neighbouring cell list and other network planning activities related with the control plane are avoided. Moreover, since macrocell-to-small data cell and small data cell-to-small data cell handovers do not exist, the problem of handover failures is essentially eliminated. In addition, since small data cell do not transmit any control plane, power consumption is greatly reduced since the small data cell can 'sleep' for large periods of time when there are no UEs around.

In terms of future applications, the control/ data-plane split allows using macro cells to maintain good connectivity and mobility using existing frequency bands (for example, around 2 GHz), while small cells are dedicated to provide higher throughput and more flexible, as well as cost-energy efficient operations using the same or higher/wider frequency bands. Importantly, higher frequency bands can be characterized by poor radio propagation properties insufficient for macro-cell usage (for example, 3.5 or 10 GHz), for which reason such higher frequency small-data-cell bands can be licensed in the same frequency region in most world countries at the fraction of the current macro cell spectrum. Higher carrier frequencies imply higher peak data rates.

Embodiments provide the following advantages over existing approaches:
- Facilitates network deployment;
- Significantly mitigates radio link and handover failures;
- Avoids PCI collision and confusion problems;
- Provides significant power savings.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A small cell base station for deployment within an overlying cell supported by an overlying cell base station of a wireless telecommunications network and operable to support communication with user equipment, said small cell base station comprising:
determining logic operable to determine a presence of said overlying cell and to determine resources allocated for transmission of control plane data by said overlying base station;
transmission logic operable to support transmission only of user plane data with said user equipment; and
preventing logic operable to prevent transmission of any user plane data within said resources allocated for transmission of control plane data by said overlying cell base station; and wherein
said user plane data comprises a channel state information-reference signal.

2. The small cell base station of claim 1, wherein said user plane data fails to include control plane data.

3. The small cell base station of claim 1 tor 2, wherein said control plane data comprises at least one of: data used to identify a small cell; and data used to identify a small cell to user equipment as a handover target.

4. The small cell base station of any preceding claim, wherein said control plane data comprises at least one of a primary synchronisation signal, a secondary synchronisation signal, a broadcast channel and a common reference signal.

5. The small cell base station of any preceding claim, wherein said user plane data further comprises a demodulation-reference signal.

6. The small cell base station of any preceding claim, wherein said preventing logic is operable to prevent transmission of any user plane data within resource elements used by said overlying cell to transmit said control plane data by said overlying cell base station.

7. The small cell base station of any preceding claim, wherein said determining logic operable to determine resources allocated for transmission of control plane data with neighbouring overlying cell base stations and said preventing logic is operable to prevent transmission of any user plane data within resource elements used by neighbouring overlying cells to transmit said control plane data by said neighbouring overlying cell base stations.

8. The small cell base station of any preceding claim, wherein said determining logic is operable to select said channel state information-reference signal for transmission as user plane data which is determined to be unused by neighbouring small cells.

9. The small cell base station of claim 8, wherein said channel state information-reference signal is transmitted with a defined power to enable user equipment to estimate path loss of signals from said small cell base station.

10. The small cell base station of any preceding claim, wherein said preventing logic is operable to prevent transmission of any data when no user plane data is scheduled for transmission.

11. The small cell base station of any preceding claim, wherein said transmission logic is operable to support transmission of user plane data with said user equipment following the establishment of a radio resource control connection with a node of said wireless telecommunications network.

12. A small cell base station method, comprising:
determining a presence of an overlying cell and determining resources allocated for transmission of control plane data by said overlying base station;
supporting transmission only of user plane data with user equipment; and
preventing transmission of any user plane data within said resources allocated for transmission of control plane data by said overlying cell base station; wherein
said user plane data comprises a channel state information-reference signal.

13. An overlying cell base station of a wireless telecommunications network for supporting an overlying cell within which at least one small cell base station is deployable, said overlying cell base station comprising:
presence determining logic operable to determine a presence of said at least one small cell base station operable to support transmission only of user plane data with user equipment; and
connection control logic operable, when it is determined from a channel state information-reference signal that a received signal strength between said user equipment and one of said at least one small cell base stations exceeds that between the user equipment and a currently serving base station by a threshold amount, to cause a radio resource control connection to be established with said user equipment and routed via said one of said at least one small cell base stations.

14. An overlying cell base station method, comprising:
determining a presence of at least one small cell base station operable to support transmission only of user plane data with user equipment; and
when it is determined from a channel state information-reference signal that a received signal strength between said user equipment and one of said at least one small cell base stations exceeds that between the user equipment and a currently serving base station by a threshold amount, causing a radio resource control connection to be established with said user equipment and routed via said one of said at least one small cell base stations.

15. A computer program product operable, when executed on a computer, to perform the method steps of claims 12 or 14.

## Patentansprüche

1. Kleinzellen-Basisstation für den Einsatz in einer darüberliegenden Zelle, die von einer darüberliegenden Zellen-Basisstation eines drahtlosen Telekommunikationsnetzwerks unterstützt wird und betriebsfähig ist, um eine Kommunikation mit einem Teilnehmergerät zu unterstützen, wobei die besagte Kleinzellen-Basisstation Folgendes umfasst:
Bestimmungslogik, die betriebsfähig ist, um ein Vorhandensein der besagten darüberliegenden Zelle zu bestimmen und um Ressourcen zu bestimmen, die der Übertragung von Steuerungsebene-Daten durch die besagte darüberliegende Basisstation zugewiesen sind;
Übertragungslogik, die betriebsfähig ist, um ausschließlich die Übertragung von Benutzerebene-Daten mit dem besagten Teilnehmergerät zu unterstützen; und
Verhinderungslogik, die betriebsfähig ist, um die Übertragung von beliebigen Benutzerebene-Daten in den besagten Ressourcen zu verhindern, die der Übertragung von Steuerungsebene-Daten durch die besagte darüberliegende Zellen-Basisstation zugewiesen sind; und wobei
die besagten Benutzerebene-Daten ein Kanalstatusinformations-Referenzsignal umfassen.

2. Kleinzellen-Basisstation nach Anspruch 1, wobei die besagten Benutzerebene-Daten keine Steuerungsebene-Daten umfassen.

3. Kleinzellen-Basisstation nach Anspruch 1 oder 2, wobei die besagten Steuerungsebene-Daten mindestens eines aus Folgendem umfassen: Daten, die zum Identifizieren einer Kleinzelle verwendet werden; und Daten, die zum Identifizieren einer Kleinzelle für ein Teilnehmergerät als ein Handover-Ziel verwendet werden.

4. Kleinzellen-Basisstation nach einem beliebigen vorstehenden Anspruch, wobei die besagten Steuerungsebene-Daten mindestens eines aus einem Synchronisationssignal, einem sekundären Synchronisationssignal, einem Rundsendekanal und einem gemeinsamen Referenzsignal umfassen.

5. Kleinzellen-Basisstation nach einem beliebigen vorstehenden Anspruch, wobei die besagten Benutzerebene-Daten weiterhin ein Demodulations-Referenzsignal umfassen.

6. Kleinzellen-Basisstation nach einem beliebigen vorstehenden Anspruch, wobei die besagte Verhinderungslogik betriebsfähig ist, um die Übertragung von beliebigen Benutzerebene-Daten in den Ressourcenelementen zu verhindern, die von der besagten darüberliegenden Zelle verwendet werden, um die besagten Steuerungsebene-Daten durch die besagte darüberliegende Zellen-Basisstation zu übertragen.

7. Kleinzellen-Basisstation nach einem beliebigen vorstehenden Anspruch, wobei die besagte Bestimmungslogik betriebsfähig ist, um Ressourcen zu bestimmten, die der Übertragung von Steuerungsebene-Daten mit benachbarten darüberliegenden Zellen-Basisstationen zugewiesen sind, und die besagte Verhinderungslogik betriebsfähig ist, um die Übertragung von beliebigen Benutzerebene-Daten. in den Ressourcenelementen zu verhindern, die von benachbarten darüberliegenden Zellen verwendet werden, um die besagten Steuerungsebene-Daten durch die besagten benachbarten darüberliegenden Zellen-Basisstationen zu übertragen.

8. Kleinzellen-Basisstation nach einem beliebigen vorstehenden Anspruch, wobei die besagte Bestimmungslogik betriebsfähig ist, um das besagte Kanalstatusinformations-Referenzsignal für die Übertragung als Benutzerebene-Daten auszuwählen, die bestimmt werden, von benachbarten Kleinzellen nicht verwendet zu werden.

9. Kleinzellen-Basisstation nach Anspruch 8, wobei das besagte Kanalstatusinformations-Referenzsignal mit einer definierten Leistung übertragen wird, um es dem Teilnehmergerät zu ermöglichen, einen Pfadverlust von Signalen von der besagten Kleinzellen-Basisstation zu schätzen.

10. Kleinzellen-Basisstation nach einem beliebigen vorstehenden Anspruch, wobei die besagte Verhinderungslogik betriebsfähig ist, um die Übertragung von beliebigen Daten zu verhindern, wenn keine Benutzerebene-Daten für die Übertragung geplant sind.

11. Kleinzellen-Basisstation nach einem beliebigen vorstehenden Anspruch, wobei die besagte Übertragungslogik betriebsfähig ist, um die Übertragung von Benutzerebene-Daten mit dem besagten Teilnehmergerät nach Herstellung einer Funkressourcensteuerungsverbindung mit einem Knoten des besagten drahtlosen Telekommunikationsnetzwerks zu unterstützen.

12. Verfahren einer Kleinzellen-Basisstation, umfassend:
Bestimmen eines Vorhandenseins einer darüberliegenden Zelle und Bestimmen von Ressourcen, die der Übertragung von Steuerungsebene-Daten durch die besagte darüberliegende Basisstation zugewiesen sind;
Unterstützen ausschließlich der Übertragung von Benutzerebene-Daten mit einem Teilnehmergerät; und
Verhindern der Übertragung von beliebigen Benutzerebene-Daten in den besagten Ressourcen, die der Übertragung von Steuerungsebene-Daten durch die besagte darüberliegende Zellen-Basisstation zugewiesen sind; wobei
die besagten Benutzerebene-Daten ein Kanalstatusinformations-Referenzsignal umfassen.

13. Darüberliegende Zellen-Basisstation eines drahtlosen Tetekommunikationsnetzwerks für die Unterstützung einer darüberliegenden Zelle in der mindestens eine Kleinzellen-Basisstation einsetzbar ist, wobei die darüberliegende Zellen-Basisstation Folgendes umfasst:
Vorhandensein-Bestimmungslogik, die betriebsfähig ist, um ein Vorhandensein der besagten mindestens einen Kleinzellen-Basisstation zu bestimmen, die betriebsfähig ist, um ausschließlich die Übertragung von Benutzerebene-Daten mit einem Teilnehmergerät zu unterstützen; und
Verbindungssteuerungslogik, die betriebsfähig ist, um, wenn aus einem Kanalstatusinformations-Referenzsignal bestimmt wird, dass eine empfangene Signalstärke zwischen dem besagten Teilnehmergerät und einer der besagten mindestens einen Kleinzellen-Basisstatiönen jene zwischen dem Teilnehmergerät und einer aktuell dienenden Basisstation um einen Grenzwert übersteigt, zu veranlassen, dass eine Funkressourcensteuerungsverbindung mit dem besagten Teilnehmergerät hergestellt und über die besagte eine der besagten mindestens einen Kleinzellen-Basisstationen weitergeleitet wird.

14. Verfahren einer darüberliegenden Zellen-Basisstation, umfassend:
Bestimmen eines Vorhandenseins von mindestens einer Kleinzellen-Basisstation, die betriebsfähig ist, um ausschließlich die Übertragung von Benutzerebene-Daten mit einem Teilnehmergerät zu unterstützen; und
Veranlassen, dass, wenn aus einem Kanalstatusinformations-Referenzsignal bestimmt wird, dass eine empfangene Signalstärke zwischen dem besagten Teilnehmergerät und einer der besagten mindestens einen Kleinzellen-Basisstationen jene zwischen dem Teilnehmergerät und einer aktuell dienenden Basisstation um einen Grenzwert übersteigt, eine Funkressourcensteuerungsverbindung mit dem besagten Teilnehmergerät hergestellt und über die besagte eine der besagten mindestens einen Kleinzellen-Basisstationen weitergeleitet wird.

15. Computerprogrammprodukt, das betriebsfähig ist, um bei Ausführung auf einem Computer die Verfahrensschritte nach Anspruch 12 oder 14 durchzuführen.

## Revendications

1. Station de base de petite cellule pour le déploiement à l'intérieur d'une cellule sus-jacente supportée par une station de base de cellule sus-jacente d'un réseau de télécommunications sans fil et exploitable pour supporter la communication avec un équipement d'utilisateur, ladite station de base de petite cellule comprenant :
une logique de détermination exploitable pour déterminer une présence de ladite cellule sus-jacente et pour déterminer des ressources allouées pour la transmission de données de plan contrôlé par ladite station de base sus-jacente ;
une logique de transmission exploitable pour supporter la transmission uniquement de données de plan utilisateur avec ledit équipement d'utilisateur ; et
une logique d'empêchement pour empêcher la transmission de toute donnée de plan utilisateur à l'intérieur desdites ressources allouées pour la transmission de données de plan contrôle par ladite station de base de cellule sus-jacente ; et dans laquelle
lesdites données de plan utilisateur comprennent un signal de référence d'informations d'état de canal.

2. Station de base de petite cellule selon la revendication 1, dans laquelle lesdites données de plan utilisateur n'incluent pas de données de plan contrôle.

3. Station de base de petite cellule selon la revendication 1 ou 2, dans laquelle lesdites données de plan contrôle comprennent au moins une parmi : des données utilisées pour identifier une petite cellule ; et des données utilisées pour identifier une petite cellule à un équipement d'utilisateur comme une cible de transfert.

4. Station de base de petite cellule selon l'une quelconque des revendications précédentes, dans laquelle lesdites données de plan contrôle comprennent au moins un parmi un signal de synchronisation primaire, un signal de synchronisation secondaire, un canal de diffusion et un signal de référence commun.

5. Station de base de petite cellule selon l'une quelconque des revendications précédentes, dans laquelle lesdites données de plan utilisateur comprennent en outre un signal de référence de démodulation.

6. Station de base de petite cellule selon l'une quelconque des revendications précédentes, dans laquelle ladite logique d'empêchement est exploitable pour empêcher la transmission de toute donnée de plan utilisateur à l'intérieur d'éléments dé ressource utilisés par ladite cellule sus-jacente pour transmettre lesdites données de plan contrôle par ladite station de base de cellule sus-jacente.

7. Station de base de petite cellule selon l'une quelconque des revendications précédentes, dans laquelle ladite logique de détermination exploitable pour déterminer des ressources allouées pour la transmission de données de plan contrôle avec des stations de base de cellules sus-jacentes voisines et ladite logique d'empêchement est exploitable pour empêcher la transmission de toute donnée de plan utilisateur à l'intérieur d'éléments de ressource utilisés par des cellules sus-jacentes voisines pour transmettre lesdites données de plan contrôle par lesdites stations de base de cellules sus-jacentes voisines.

8. Station de base de petite cellule selon l'une quelconque des revendications précédentes, dans laquelle ladite logique de détermination est exploitable pour sélectionner ledit signal de référence d'informations d'état de canal pour la transmission comme des données de plan utilisateur qui sont déterminées comme étant inutilisées par des petites cellules voisines.

9. Station de base de petite cellule selon la revendication 8, dans laquelle ledit signal de référence d'informations d'état de canal est transmis avec une puissance définie pour permettre à un équipement d'utilisateur d'estimer un affaiblissement de trajet de signaux en provenance de ladite station de base de petite cellule.

10. Station de base de petite cellule selon l'une quelconque des revendications précédentes, dans laquelle ladite logique d'empêchement est exploitable pour empêcher la transmission de toute donnée lorsqu'aucune donnée de plan utilisateur n'est ordonnancée pour la transmission.

11. Station de base de petite cellule selon l'une quelconque des revendications précédentes, dans laquelle ladite logique de transmission est exploitable pour supporter la transmission de données de plan utilisateur avec ledit équipement d'utilisateur suite à l'établissement d'une connexion de contrôle de ressource radio avec un noeud dudit réseau de télécommunications sans fil.

12. Procédé de station de base de petite cellule, comprenant les étapes suivantes :
déterminer une présence d'une cellule sus-jacente et déterminer des ressources allouées pour la transmission de données de plan contrôle par ladite station de base sus-jacente ;
supporter la transmission uniquement de données de plan utilisateur avec un équipement d'utilisateur ; et
empêcher la transmission de toute donnée de plan utilisateur à l'intérieur desdites ressources allouées pour la transmission de données de plan contrôle par ladite station de base de cellule sus-jacente ; dans lequel
lesdites données de plan utilisateur comprennent un signal de référence d'informations d'état de canal.

13. Station de base de cellule sus-jacente d'un réseau de télécommunications sans fil pour supporter une cellule sus-jacente à l'intérieur de laquelle au moins une station de base de petite cellule est déplorable, ladite station de base de cellule sus-jacente comprenant:
une logique de détermination de présence exploitable pour déterminer une présence de ladite au moins une station de base de petite cellule exploitable pour supporter la transmission uniquement de données de plan utilisateur avec un équipement d'utilisateur ; et
une logique de contrôle de connexion exploitable, lorsqu'il est déterminé à partir d'un signal de référence d'informations d'état de canal qu'une intensité de signal reçu entre ledit équipement d'utilisateur et une de ladite au moins une station de base de petite cellule dépasse celle entre l'équipement d'utilisateur et une station de base desservant actuellement d'une quantité de seuil, pour amener une connexion de contrôle de ressource radio à être établie avec ledit équipement d'utilisateur et routée via ladite une de ladite au moins une station de base de petite cellule.

14. Procédé de station de base de cellule sus-jacente, comprenant les étapes suivantes :
déterminer une présence d'au moins une station de base de petite cellule exploitable pour supporter la transmission uniquement de données de plan utilisateur avec un équipement d'utilisateur ; et
lorsqu'il est déterminé à partir d'un signal de référence d'informations d'état de canal qu'une intensité de signal reçu entre ledit équipement d'utilisateur et une de ladite au moins une station de base de petite cellule dépasse celle entre l'équipement d'utilisateur et une station de base desservant actuellement d'une quantité de seuil, amener une connexion de contrôle de ressource radio à être établie avec ledit équipement d'utilisateur et routée via ladite une de ladite au moins une station de base de petite cellule.

15. Produit de programme informatique exploitable, lorsqu'il est exécuté sur un ordinateur, pour effectuer les étapes de procédé selon les revendications 12 ou 14.
